# EUROPEAN PATENT APPLICATION

(11) **EP 4 071 336 A1**
(43) Date of publication of application: **12.10.2022**
(21) Application number: 21840415.0
(22) Date of filing: 28.04.2021
(51) Int. Cl.: E21C 31/02, F16H 57/02

(54) **COAL SHEARER CUTTING SYSTEM**

(30) Priority: 25.02.2021 CN 202110213786
(71) Applicant: Shanghai, Tiandi Mining Equipment Technology Co., Ltd, Shanghai 201401 (CN); China Coal Technology & Engineering Group Co Ltd., Shanghai 200030 (CN); China Coal Technology & Engineering Group Co Ltd., Beijing 100013 (CN)
(72) Inventor: ZHANG, Liqiang, Shanghai 200030 (CN); ZHOU, Changfei, Shanghai 200030 (CN); HU, Tao, Shanghai 200030 (CN); HE, Lining, Shanghai 200030 (CN); CHEN, Qiaoying, Shanghai 200030 (CN); SONG, Zhen, Shanghai 200030 (CN); HU, Jing, Shanghai 200030 (CN); GU, Enyang, Shanghai 200030 (CN); WANG, Zhenqian, Shanghai 200030 (CN); DONG, Chao, Shanghai 200030 (CN); DING, Haichun, Shanghai 200030 (CN); GUO, Dai, Shanghai 200030 (CN); QIAN, Liquan, Shanghai 200030 (CN); YU, Huiting, Shanghai 200436 (CN); KAN, Wenhao, Shanghai 200436 (CN); WU, Zhenyi, Shanghai 200436 (CN); YANG, Xi, Shanghai 200436 (CN); DU, Zunzhong, Shanghai 200436 (CN); XU, Jiqiao, Shanghai 200436 (CN); ZHU, Chengcai, Shanghai 200436 (CN); SHEN, Shengchao, Shanghai 200436 (CN)
(74) Representative: Wang, Bo
(86) International application number: PCT/CN2021/090377
(87) International publication number: WO 2022/178974

(57) **Abstract**

The present invention relates to a cutting system for a coal mining machine, which includes a fixed reduction gearbox and a ranging arm stand. The fixed reduction gearbox includes a housing, a cutting motor and a front-stage cutting drive mechanism. The front-stage cutting drive mechanism is a drive mechanism with a multi-stage large reduction ratio formed by the combination of a planetary mechanism and a fixed-axis gear drive mechanism. The ranging arm stand includes a housing ranging armand a rear-stage cutting drive mechanism. The rear-stage cutting drive mechanism is a one-stage fixed-axis gear drive mechanism with a small reduction ratio. The cores of the front-stage end gear of the front-stage cutting drive mechanism and the rear-stage head gear of the rear-stage cutting drive mechanism are respectively provided with a front-stage spline hole and a rear-stage spline hole. There is a spline sleeve with internal and external splines in the front-stage spline hole. The internal spline in the spline sleeve and the rear-stage spline hole are respectively matched with the front-and-rear splines of the same spline shaft. The present invention can realize a wider mining range, is adaptive to the mining of low-seam coal, and can get the center of gravity of the coal mining machine.

## Description

### Technical field

The present invention relates to a cutting system for a coal mining machine, which is suitable for a coal mining machine with a short body and a wide mining range.

### Background Art

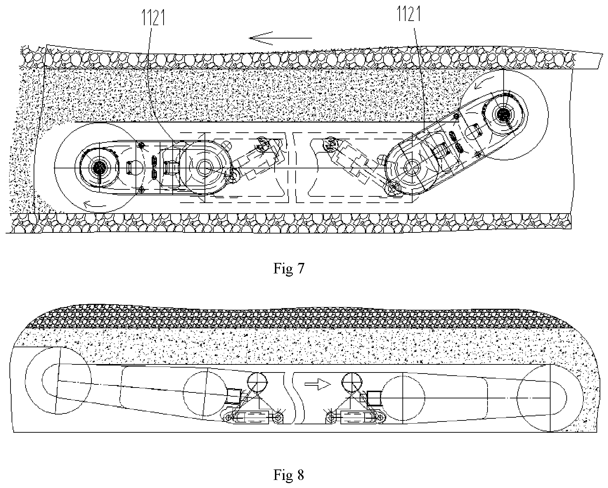

The ranging arm structure (especially the high-power ranging arm) of the existing thin-seam coal mining machine usually adopts a conventional structure with independent power (see Fig 8). This ranging arm structure has a high reliability, but it is more complicated, especially when the required lower mining limit is low, the ranging arm needs to be arranged in a suspended state relative to the conveyor ledge. In this case, the rear ranging arm has a slightly small ripping space, which is not adaptive to coal seam mining with a large upper limit.

In order to optimize the ranging arm structure, there is a practice in the industry to set the cutting system as a combination of a fixed part containing power and a swing part that outputs power. In some designs, however, the loading channel is taken into account so that a part of the drive mechanism of the fixed part above the conveyor trough, which affects the coal-passing space; some ranging arms use a conventional structure with a planetary mechanism in the roller, which makes it impossible to adopt a small-size roller, limiting the lower mining limit, and thereby affecting the mining of thin or extremely thin coal seams; in some other designs, the power and the main reduction part on the side near the coal wall in front of the conveyor trough (namely between the left and right rollers), in which case, the mining height can be lower, but the drive mechanism is relatively complicated, and the center of gravity of the fixed part and the swing part is relatively biased toward the coal wall, posing a certain adverse effect on the operation of the whole coal mining machine, especially in the case of underhand stope.

### Summary of the Invention

The present invention aims to provide a cutting system for a coal mining machine, which has a wide mining range from bottom to top, is adaptive to the mining of low-height coal seams, and can improve the center of gravity of the coal mining machine.

The main technical scheme of the present invention is as described below:

A cutting system for a coal mining machine, includes a fixed reduction gearbox and a ranging arm stand. The fixed reduction gearbox includes a housing, as well as a cutting motor and a front-stage cutting drive mechanism arranged in the housing. The output shaft of the cutting motor is connected to a front-stage cutting drive mechanism which is a multi-stage large reduction ratio drive mechanism with a combination of a planetary mechanism and a fixed-axis gear drive mechanism; and the output end of which is the front-stage end gear. The ranging arm stand includes a housing ranging armand a rear-stage cutting drive mechanism. The housing ranging armincludes an L-shaped drive box. The rear-stage cutting drive mechanism is a fixed-axis gear drive mechanism with a small reduction ratio, including a rear-stage head gear, a rear-stage idler gear and a rear-stage gear shaft that are externally meshed sequentially. The rear-stage head gear is mounted inside the free end of the left and right extension section of the drive box. The free end of the front-and-rear extension section of the drive gearbox are cylindrical. The rear-stage gear shaft is mounted on the front-and-rear extension section of the drive gearbox, with its end portion extending forward to be beyond the free end of the front-and-rear extension section on the one hand and provided with a positioning installation structure for the roller on the other hand. The core of the front-stage end gear and the core of the rear-stage head gear are respectively provided with a front-stage spline hole and a rear-stage spline hole. A spline sleeve with internal and external splines is mounted in the front-stage spline hole, and the internal spline of the spline sleeve and the rear-stage spline hole are respectively matched to the front spline and the rear spline of the same spline shaft, and the center line of the spline shaft has a horizontal front-and-rear extension section.

The housing of the ranging arm stand further includes a front support arm and a rear support arm respectively located in front of and behind the left and right extension section of the drive gearbox, wherein, the front support arm and the rear support arm are both of a suspension structure, with one end connected to the drive gearbox; the ends of the front support arm and the rear support arm away from the front-and-rear extension section of the drive gearbox are free ends; the top surfaces of the front support arm and the rear support arm are not higher than the top surface of the left and right extension section of the drive gearbox, and the bottom surfaces of the same are not lower than the bottom surface of the left and right extension section of the drive gearbox; the free ends of the front support arm and the rear support arm are respectively hinged with the housing of the fixed reduction gearbox, and the hinge axis coincides with the center line of the spline shaft.

The housing of the fixed reduction gearbox is provided with a front hinge seat and a rear hinge seat, wherein, both the front hinge seat and the rear hinge seat are of a double-lug seat structure; the free ends of the front support arm and the rear support arm respectively fit with the front hinge seat and the rear hinge seat and hinged by insertion of a front pin roll and a rear pin roll, respectively.

The rear hinge lug of the front hinge seat is just imbedded between the front support arm and the drive gearbox and maintains a gap to the front support arm and the drive gearbox. The front-stage end gear is mounted in the rear hinge lug of the front hinge seat. In the internal hole of the rear hinge lug of the front hinge seat, an annular axial spacer is set. The front pin is located in front of the axial spacer. The front-stage end gear and the spline sleeve are located behind the axial spacer. The front pin roll is provided with a central through hole, the internal spline of the spline sleeve is arranged in the rear-section internal hole, and the front-section internal hole of the spline sleeve is an unthreaded hole. There is a positioning sleeve fixedly mounted in the central through hole. The rear end of the positioning sleeve is inserted into the unthreaded hole of the spline sleeve, axially limiting and the core part of the front end face of the spline roll. The middle part of the positioning sleeve is provided with an annular flange , and the external cylindrical surface of the annular flange is of clearance fit with the central through hole and the internal hole of the axial spacer at the same time, and there is a seal between the fit surfaces. The end surface seal is set between the rear hinge lug of the front hinge seat and the rear-stage cutting drive mechanism and/or the drive box.

The front support arm is L-shaped, the free end of the left and right extension section of the front support arm is the free end of the front support arm, and the rear end of the front-and-rear extension section of the front support arm is connected to the drive gearbox. The top surface of the front-and-rear extension section of the front support arm is an inclined surface, and the farther away from the free end it is, the lower the height will be.

The hinge joints of the front support arm and the rear support arm with the housing of the fixed reduction gearbox are respectively lubricated by a front automatic lubrication device and a rear automatic lubrication device.

The cutting system for the coal mining machine also includes an cylinder. One end of the cylinder is hinged on the housing of the fixed reduction gearbox. The free end of the front support arm is externally provided with an cylinder connecting lug, and the other end of the cylinder is hinged on the connecting lug of the cylinder. The hinge axes at both ends of the cylinder extend horizontally in the front-and-rear direction.

The cylinder and the front-stage cutting drive mechanism are arranged in different chambers in the internal cavity of the housing of the fixed reduction gearbox, wherein, the cylinder is located in front of the front-stage cutting drive mechanism, and the chamber where the cylinder is located is formed by the enclosure of the housing of the fixed reduction gearbox, the front support arm, the front hinge seat and the side plate installed on the front side of the housing of the fixed reduction gearbox.

The free end of the front support arm is preferably provided with upper and lower external cylindrical surfaces that are coaxial with the spline shaft, and the housing of the fixed reduction gearbox is provided with upper and lower internal cylindrical surfaces that are coaxial with the spline shaft. The two internal cylindrical surfaces are in clearance fit with the two external cylindrical surfaces, respectively.

There is one cutting motor and one planetary mechanism, respectively, wherein, the output shaft of the cutting motor is coaxially connected with the input end of the planetary mechanism, the output end of the planetary mechanism is coaxially connected with a center gear, and the center gear is meshed with the left and right sets of gear reduction mechanisms to play a role of driving at the same time, and the central gear and the gear reduction mechanism constitute the fixed shaft gear drive mechanism.

The beneficial effects of the present invention are as follows:

The front-stage cutting drive mechanism transmits power to the rear-stage cutting drive mechanism through the spline coupling structure. Due to the application of multiple spline coupling structures with backlash fit, the radial floating amount increases. Furthermore, relevant parts forming the spline coupling structure can be automatically centered, so the radial offset caused by the wear of the rotating support surface at both axial ends of the drive part has little effect on the drive meshing, and the drive structure between the front-and-rear cutting drive mechanisms is more adaptive to the wearability of the rotating support surfaces at both ends, as the result, the reliability of power transmission between the ranging arm stand and the fixed reduction gearbox can be significantly improved.

As the main reduction part of the cutting system, the front-stage cutting drive mechanism is arranged in the housing of the fixed reduction gearbox, and does not swing with the ranging arm stand, while a one-stage fixed-axis gear drive mechanism with a small reduction ratio swings with the ranging arm stand. The one-stage fixed-axis gear drive mechanism is located behind the roller, so it does not affect the ripping operation and will not cause interference between the ranging arm stand and the coal platform.

Since the planetary mechanism and other heavy parts are closer to the goaf side, the overall center of gravity of the coal mining machine can be shifted to the goaf side, and is located closer to the support leg (or shovel) than the traditional structure of the coal mining machine, which improves the stability of the mining machine in the stationary state and the walking state.

The roller is sleeved on the front-and-rear extension section of the cylindrical drive box, so that the front part of the roller is coaxially connected with the rear-stage gear shaft through the roller positioning and installation structure, to realize the installation of the roller. In this case, the connection is simple and a small-diameter roller may be used. Therefore, the structure is suitable for the mining of low-seam coal, and the maintenance is more convenient.

Since multiple supporting connection points are provided between the housing of the ranging arm stand and the housing of the fixed reduction gearbox, and they are respectively arranged at the front-and-rear of the power drive connection point (i.e. the spline coupling structure), the radial shift caused by wear at the front-and-rear support connection points has less effect on the power drive connection point located between the two, therefore this multi-point support connection structure can provide a more reliable guarantee for the transmission of the cutting power.

By adding a front automatic lubrication device and a rear automatic lubrication device at the front-and-rear support connection points respectively, the automatic, effective and long-term lubrication on the support bearing surface is ensured, thereby reducing wear and extending the service life of the support connection points.

The bottom-to-top thicknesses of the front support arm and the rear support arm are both smaller than the drive gearbox, and much smaller than the diameter of the matching roller, which is to avoid the interference between the front support arm and the rear support arm versus the top coal platform as far as possible when the housing of the ranging arm stand is at the upper shearing limit position, so that the mining height can be higher. The present invention not only has a lower mining lower limit, but also has a higher mining upper limit, therefore a wider mining range is allowed, suitable for short-frame coal mining machines, and the smooth mining of extremely thin or thin coal seams can be achieved.

The front-stage end gear is mounted in the rear hinge lug of the front hinge seat, so that the front-stage cutting drive mechanism and the front hinge seat share the same housing, and the internal space of the shared housing is functionally partitioned by setting an axial spacer, in order that the structure of the connection between the housing of the ranging arm stand and the housing of the fixed reduction gearbox is as simple and compact as much as possible. By setting the front pin roll as a hollow structure, which provides on sufficient space for disassembly and assembly of the spline shaft (the space for disassembly and assembly is located on the side of the roller, without occupying the coal passage or affecting the coal passing) on the one hand, and can achieve axial limit on the spline shaft by mounting a positioning device in the disassembly and assembly space on the other hand, killing two birds with one stone.

By providing an end face seal between the rear hinge lug of the front hinge seat and the rear-stage cutting drive mechanism and/or the drive gearbox, and setting a seal at the clearance fit between the annular flange in the middle of the positioning sleeve and the central through hole of the front pin roll, water, coal powder and other impurities can be effectively prevented from entering the spline coupling structure from the front or back, to ensure the cleanness and lubrication, prolong the service life, and improve the working reliability of the spline coupling structure.

Since the cylinder's connecting lug is relatively close to the hinge axis between the free end of the front support arm and the fixed gearbox housing, the force arm that drives the ranging arm stand housing to swing is relatively short, and the swing angle range of the ranging arm stand housing is larger accordingly, which means a wider range of mining height can be achieved.

A cutting motor is used to drive the gear reduction mechanism arranged on the left and right sides of the gear reduction mechanism, and respectively transmit power to the left and right booms, which can make full use of the cutting power, improve the use efficiency, and reduce the loss of idling transmission movement.

### Description of the drawings

Fig 1 is a schematic structural diagram of the present invention according to an embodiment;
Fig 2 is a schematic structural diagram of the ranging arm stand shown in Fig 1;
Fig 3 is a cross-sectional view of A-A shown in Fig 2;
Fig 4 is a schematic structural diagram of the fixed reduction gearbox shown in Fig 1;
Fig 5 is a detailed view of the power transmission structure between the front-stage cutting drive mechanism and the rear-stage cutting drive mechanism;
Fig 6 is a schematic diagram of the clearance fit between the free end of the front support arm and the housing of the fixed reduction gearbox;
Fig 7 is a schematic diagram for the state of the coal mining machine adopting the cutting system from the present invention when the rear ranging arm is at the upper shearing limit position;
Fig 8 is a schematic diagram for the state of the coal mining machine adopting the existing cutting system when the rear ranging arm is at the upper shearing position.

Legends of the Drawings:
1. Ranging arm Stand; 11. Housing of the Ranging arm Stand; 111. Drive Box; 112. Front Support Arm; 1121. Inclined Surface; 1122. Cylinder Connecting Lug; 1123. Upper External Cylindrical Surface; 1124. Lower External Cylindrical Surface; 113. Rear Support Arm; 12. Front Transition Sleeve; 13. Rear Transition Sleeve; 14. Front Automatic Lubrication Device; 15. Rear Automatic Lubrication Device;
2. Fixed Reduction Gearbox; 21. Housing of the Fixed Reduction Gearbox; 211. Front Hinge Seat; 2111. Front Hinge Lug of the Front Hinge Seat; 2112. Rear Hinge Lug of the Front Hinge Seat; 2113. Upper Internal Cylindrical Surface; 2114. Lower Internal Cylindrical Surface; 212. Rear Hinge Seat; 213. Axial spacer; 22. Front Pin Roll; 23. Rear Pin Roll; 24. Front Wear-resistant sleeve; 25. Rear Wear-resistant sleeve; 26. Positioning Sleeve; 27. Sealing ring; 28. Sealing ring; 29. Side Plate;
3. Roller;
4. Cylinder;
5. Spline Shaft;
6. Spline Sleeve;
7. Cutting Motor;
81. Planetary Mechanism; 82. Front-stage End Gear; 821. Front-stage Spline Hole; 83. Center Gear;
91. Rear-stage Head Gear; 911. Rear-stage Spline Hole; 92. Rear-stage Idler Gear; 93. Rear-stage Gear Shaft.

### Detailed description of embodiments

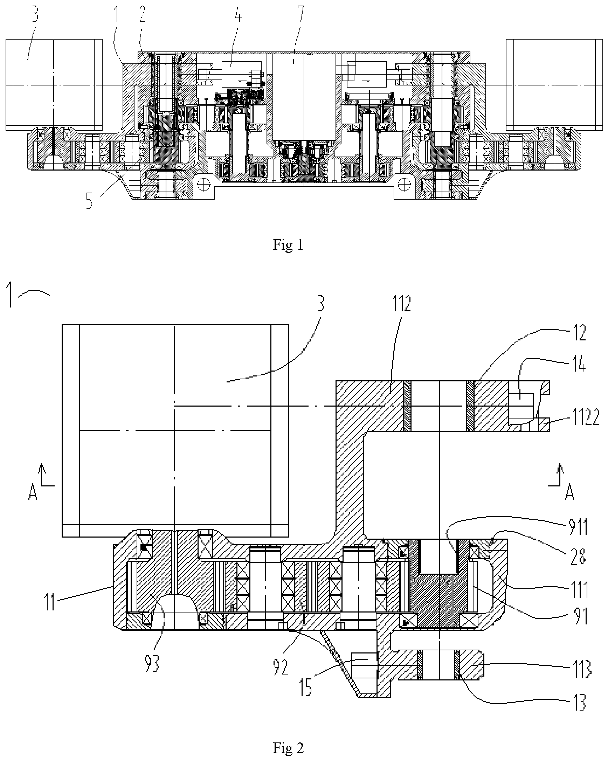

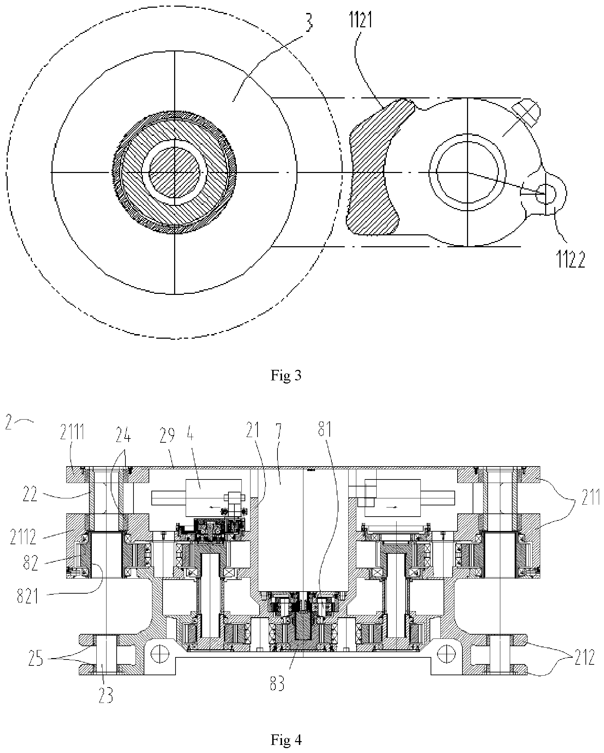

The present invention discloses a cutting system for a coal mining machine, as shown in Figs 1-7, which includes a fixed reduction gearbox 2 and a ranging arm stand 1. The fixed reduction gearbox 2 includes a housing 21 of the fixed reduction gearbox, as well as a cutting motor 7 and a front-stage cutting drive mechanism which are arranged inside the housing 21. The output shaft of the cutting motor is connected to a front-stage cutting drive mechanism. The front-stage cutting drive mechanism is a multi-stage large reduction ratio drive mechanism with a combination of a planetary mechanism 81 and a fixed-axis gear drive mechanism. The output end of the front-stage cutting drive mechanism is the front-stage end gear 82, and the front-stage end gear is mounted in the housing of the fixed reduction gearbox through a bearing rotation support. The ranging arm stand includes a housing 11 of the ranging arm stand and a rear-stage cutting drive mechanism. The housing of the ranging arm stand includes an L-shaped drive gearbox 111. The rear-stage cutting drive mechanism is a one-stage fixed-axis gear drive mechanism with a small reduction ratio, which includes a rear-stage head gear 91, a rear-stage idler gear 92 and a rear-stage gear shaft 93 that are externally meshed sequentially. The rear-stage head gear is mounted inside the free end of the left and right extension section of the drive box through the bearing rotation support. The rear-stage idler is mounted on the rear-stage idler shaft through the bearing rotation support. The rear-stage idler shaft is fixedly mounted on the front-and-rear extension section of the drive gearbox. The free end of the front-and-rear extension section of the drive gearbox are cylindrical. The rear-stage gear shaft is mounted on the front-and-rear extension section of the drive gearbox, with its end portion extending forward to be beyond the free end of the front-and-rear extension section. The rear end of the rear-stage gear shaft is provided with a positioning installation structure for mounting the roller 3. When mounting the roller, the roller is sleeved on the front-and-rear extension of the drive gearbox, and the front part of the roller is coaxially connected with the rear-stage gear shaft through the roller positioning installation structure. The core of the front-stage end gear and the core of the rear-stage head gear are respectively provided with a front-stage spline hole 821 and a rear-stage spline hole 911. A spline sleeve 6 with internal and external splines is mounted in the front-stage spline hole. The external spline of the spline sleeve matches the front-stage spline hole. The internal spline of the spline sleeve and the rear-stage spline hole are respectively matched with the front-and-rear splines of the same spline shaft 5, and the center line of the spline shaft has a horizontal front-and-rear extension section. When the front-stage end gear rotates, it drives the spline sleeve to rotate, then the spline sleeve drives the spline shaft to rotate, and in the same way, the spline shaft drives the rear-stage head gear to rotate, thereby realizing the power transmission from the front-stage cutting drive mechanism to the rear-stage cutting drive mechanism.

The one-stage spline transmission is formed between the front-stage end gear and the spline sleeve, and the second-stage spline transmission is formed between the spline sleeve and the spline shaft, as well as between the spline shaft and the rear-stage head gear. Due to the adoption of multiple spline coupling structures with backlash fits, the amount of radial floating increases. Furthermore, the relevant parts forming the spline coupling structure can be automatically centered, so the radial offset caused by the wear of the rotating support surface at the axial ends of the drive parts has little effect on the drive meshing, or the drive structure between the front-stage cutting drive mechanism and the rear-stage cutting drive mechanism is more adaptable to the wear of the rotating support surfaces at both ends of the axial direction. Therefore, the power transmission reliability between the ranging arm and the fixed reduction gearbox are significantly improved.

As the main reduction part of the cutting system, the front-stage cutting drive mechanism is arranged in the housing of the fixed reduction gearbox, and does not swing with the ranging arm stand, while a one-stage fixed-axis gear drive mechanism with a small reduction ratio swings with the ranging arm stand. The one-stage fixed-axis gear drive mechanism is located behind the roller, so it does not affect the ripping operation and will not cause interference between the ranging arm stand and the coal platform. Since the installation position of the roller 3 is only the free end of the front-and-rear extension section of the cylindrical drive gearbox, and the exposed end of the rear-stage gear shaft, the connection structure is simple, and a small-diameter roller may be used. Therefore, the structure is suitable for the mining of low--seam coal, and the maintenance is more convenient.

In the embodiment shown in the Fig, the rear end of the front-stage end gear is supported on the front bearing seat through a bearing, and the front bearing seat is mounted on the housing of the fixed reduction gearbox. The front end of the rear-stage head gear is supported on the rear bearing seat through a bearing, and the rear bearing seat is mounted on the housing of the ranging arm stand.

The housing 11 of the ranging arm stand may further include a front support arm 112 and a rear support arm 113 which are respectively located in front of and behind the left and right extension section of the drive gearbox 111. The front support arm and the rear support arm are both of a suspension structure with one end connected to the drive gearbox. The ends of the front support arm and the rear support arm away from the front-and-rear extension section of the drive gearbox are free ends. The top surfaces of the front support arm and the rear support arms are preferably not higher than the top surfaces of the left and right extension section of the drive gearbox, and the bottom surfaces of the front support arm and the rear support arm are preferably not lower than the bottom surface of the left and right extension section of the drive gearbox, that means, the bottom-to-top thicknesses of the front support arm and the rear support arm are both smaller than the drive gearbox, which is to avoid the interference between the front support arm and the rear support arm versus the top coal platform as far as possible when the housing of the ranging arm stand is at the upper shearing limit position, so that the mining height can be higher. For the mining of extremely thin or thin coal seams, the ranging arm of the present invention can not only meet a lower mining limit, but also meet an upper mining limit. Therefore a wider mining range is allowed, suitable for short-frame coal mining machines.

The free ends of the front support arm and the rear support arm are respectively hinged with the housing of the fixed reduction gearbox, and the hinge axis coincides with the center line of the spline shaft.

In this embodiment, the front support arm, the rear support arm and the drive gearbox are of an integrated structure.

Since the support connection points formed between the housing of the ranging arm stand and the housing of the fixed reduction gearbox are respectively located in front of and behind the power transmission connection points of the front-stage and rear-stage cutting drive mechanism, the radial shift caused by wear at the front-and-rear support connection points has less effect on the power drive connection point located between the two, therefore this multi-point support connection structure can provide a more reliable guarantee for the transmission of the cutting power. On the other hand, the average force point of the roller is located between the front-and-rear support connection points, and the force state of the housing of the ranging arm stand is better.

The housing of the fixed reduction gearbox is correspondingly provided with a front hinge seat 211 and a rear hinge seat 212, which are both of a double-lug seat structure. The free ends of the front support arm and the rear support arm are fitted to the front hinge seat and the rear hinge seat, respectively, and are inserted through with the front pin roll 22 and the rear pin roll 23 respectively to achieve hinge joint.

The front support arm and the rear support arm are respectively provided with a front through hole and a rear through hole which are coaxial. The front transition sleeve 12 and the rear transition sleeve 13 are coaxially installed in the front through hole and the rear through hole respectively in a fixing way. The front transition sleeve and the front through hole form a front hinge interface structure, and the rear transition sleeve and the rear through hole form a rear hinge interface structure. A pair of front wear-resistant sleeves 24 and a pair of rear wear-resistant sleeves 25 are fixedly installed in the lug holes of the front hinge seat and the rear hinge seat, respectively. The front pin roll goes through the front transition sleeve and the front wear-resistant sleeve, and the rear pin roll goes through the rear transition sleeve and the rear wear-resistant sleeve. The front pin roll and the rear pin roll are in clearance fit with the front transition sleeve and the rear transition sleeve, respectively. The front pin roll and the rear pin roll are tightly fitted with the front wear-resistant sleeve and the rear wear-resistant sleeve, respectively.

The rear hinge lug 2112 of the front hinge seat is just imbedded between the front support arm and the drive gearbox, and a gap is maintained between the front support arm and the drive gearbox to ensure relative swing with the housing of the ranging arm stand. The front-stage end gear is mounted in the rear hinge lug of the front hinge seat. An annular axial spacer 213 is provided in the internal hole of the rear hinge lug of the front hinge seat, the front pin roll is located in front of the axial spacer, and the front end gear and the spline sleeve are located behind the axial spacer. In this embodiment, the axial spacer is a part of the rear hinge lug entity of the front hinge seat, and is an annular structure protruding radially toward the center of the lug hole. The front pin roll is provided with a central through hole. The internal spline of the spline sleeve 6 is arranged in the rear-section internal hole of the spline sleeve, and the front-section internal hole is an unthreaded hole. A positioning sleeve 26 is fixedly installed in the central through hole, and the positioning sleeve is cup-shaped, with the rear end closed. The closed end (namely the rear end) of the positioning sleeve is inserted into the unthreaded hole of the spline sleeve through the axial spacer, and axially limits the core portion of the front end face of the spline shaft 5. In this embodiment, the rear end of the positioning sleeve is fixed with a wear-resistant pad, by which, the positioning sleeve axially limits the spline shaft, and the spline shaft contacts the wear-resistant pad and rotates relative to the wear-resistant pad. The positioning sleeve is axially confined in the central through hole by the front end cover fixed on the front hinge lug 2111 of the front hinge seat. The positioning sleeve is not in contact with the spline sleeve. The central part of the positioning sleeve is provided with an annular flange, the external cylindrical surface of the annular flange is in clearance fit with the central through hole and the internal hole of the axial spacer at the same time, and a seal is provided between the mating surfaces. In this embodiment, the external cylindrical surface of the annular flange is provided with a sealing groove, in which a sealing ring 27 is installed, through which the sealing between the positioning sleeve and the front pin roll and the rear hinge lug of the front hinge seat is realized, preventing impurities such as water and coal powder from entering the spline coupling structure from the front end.

An end face seal is provided between the rear hinge lug 2112 of the front hinge seat and the rear-stage cutting drive mechanism and/or in the left and right extension section of the drive gearbox is provided (for example, a sealing groove is provided and a sealing ring 28 is installed on the front end surface of the drive gearbox), to prevent impurities such as water and coal powder from entering the spline coupling structure from the rear end. In the embodiment shown in the drawings, the end face seal is arranged at the joint between the front end face of the rear bearing seat and the front end face of the drive gearbox.

The sealing between the annular flange and the central through hole and the axial spacer as well as the aforementioned end face sealing can ensure the cleanliness and original lubrication of the spline coupling structure, thereby increasing the service life of the spline coupling structure.

When the spline shaft is worn out, the spline shaft can be smoothly disassembled and replaced as long as the positioning sleeve 26 is removed from the front side to empty the cylindrical space in front of the spline shaft 5. In addition, the cylindrical space is located on the side of the roller and does not occupy the space above the coal passage of the conveying trough, so it does not affect coal passing and mining.

In the embodiment shown in the drawings, the lug hole of the front hinge ear of the rear hinge seat is a blind hole with an open rear end. The rear hinge lug of the rear hinge seat is fixedly mounted with a rear end cover. The blind lug hole and the rear end cover limit the rear pin roll. The rear end of the rear-stage head gear is directly supported on the drive gearbox through the bearing, and the free end of the drive gearbox is not penetrated, which can reduce the entry of dust and other impurities between the relative moving parts, and try to keep the relevant parts in good condition of relative motion state.

The rear-stage spline hole is preferably a blind hole, the orifice is on the front end surface of the rear-stage head gear, and the bottom surface of the rear-stage spline hole is the positioning surface of the rear end surface of the spline shaft.

The front support arm is L-shaped, the free end of the left and right extension section of the front support arm is also the free end of the front support arm, and the rear end of the front-and-rear extension section of the front support arm is connected to the drive gearbox. The top surface of the front-and-rear extension section of the front support arm is preferably an inclined surface 1121. The farther it is to the free end, the smaller the height is, which means the closer it is to the roller, the smaller the height will be. The distance from the highest point of the inclined surface to the hinge axis between the free end of the front support arm and the housing of the fixed reduction gearbox is preferably not greater than the distance from the top surface of the housing of the fixed reduction gearbox to the hinge axis. The inclination angle of the inclined surface relative to the inclined surface is preferably the angle between the drive gearbox and the inclined surface when the housing of the ranging arm stand is at the upper shearing limit position, so that the front support arm is completely below the top surface of the housing of the fixed reduction gearbox when the ranging arm stand is at the upper shearing limit position (see Fig 7).

The hinge joint of the front support arm and the rear support arm with the housing of the fixed reduction gearbox can also be lubricated by respectively providing a front automatic lubrication device 14 and a rear automatic lubrication device 15. The target lubrication points of the front automatic lubrication device and the rear automatic lubrication device may be respectively located on the internal hole surfaces of the front transition sleeve and the rear transition sleeve. By adding a front automatic lubrication device and a rear automatic lubrication device respectively at the front-and-rear support connection points, it can ensure the automatic, effective and long-term lubrication of the support bearing surface, reducing wear and extending the service life of the support connection point.

Further, seals are provided between both ends of the front transition sleeve and the front support arm and the front pin roll, and similarly, seals are provided between both ends of the rear transition sleeve and the rear support arm and the rear pin roll. In this embodiment, the external cylindrical surface and the internal hole surface of the front transition sleeve are provided with annular sealing grooves at both axial ends, the external cylindrical surface and the internal hole surface of the rear transition sleeve are also provided with an annular sealing groove at both axial ends, and there is a sealing ring arranged in the sealing groove, to achieve the above-mentioned sealing.

The cutting system of the coal mining machine further includes an cylinder 4, one end of which is hinged on the housing of the fixed reduction gearbox, and an cylinder connecting lug 1122 is provided outside the free end of the front support arm. The other end of the cylinder is hinged on the connecting lug of the cylinder, and the hinge axes at both ends of the cylinder extend horizontally in the front-and-rear direction. The expansion and contraction of the cylinder drives the housing of the ranging arm stand to swing with a fixed axis. Since the connecting lug of the cylinder in this structure is relatively close to the hinge axis between the free end of the front support arm and the housing of the fixed reduction gearbox, the force arm that drives the housing of the ranging arm stand to swing is relatively short. The swing angle range is larger accordingly, which means a wider range of the mine height can be achieved.

The cylinder and the front-stage cutting drive mechanism are arranged in different chambers of the internal cavity of the housing of the fixed reduction gearbox, and the cylinder is located in front of the front-stage cutting drive mechanism. Compared to the arrangement in which the cylinder is located behind the front-stage cutting drive mechanism, the planetary mechanism and other heavy parts are closer to the goaf side, the entire center of gravity of the coal mining machine can be shifted to the goaf side, which is closer to the support leg (or the shovel) position, improving the stability of the coal mining machine in static and walking states. The chamber where the cylinder is located is formed by the enclosure of the housing of the fixed reduction gearbox, the front support arm, the front hinge seat and the side plate 29 installed on the front side of the housing of the fixed reduction gearbox. The cylinder is placed in a separate chamber, which can provide a good working environment for the swing of the cylinder, thereby improving the reliability of the cylinder.

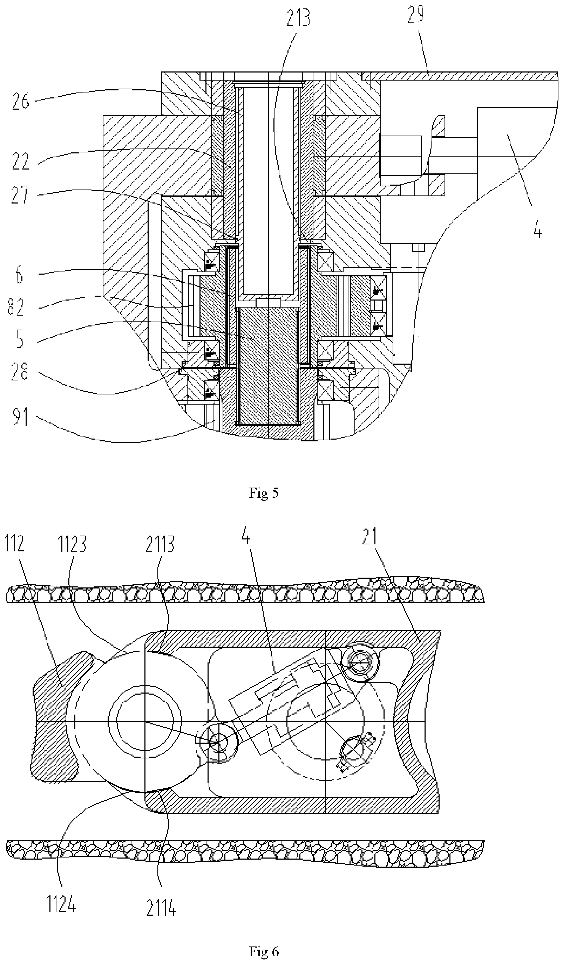

Further, the free end of the front support arm is preferably provided with upper and lower external cylindrical surfaces 1123 and 1124 that are coaxial with the spline axis, and the housing of the fixed reduction gearbox is provided with an upper and lower internal cylindrical surfaces 2113 and 2114 that are coaxial with the spline axis. The, the two internal cylindrical surfaces are in clearance fit with the two external cylindrical surfaces respectively (see Fig 6), which is helpful to prevent dust and other impurities from entering the housing of the fixed reduction gearbox from the free end of the front support arm. Therefore, it is conductive to ensure the cleanliness of the cavity in the chamber where the cylinder is located.

There is one cutting motor 7 and one planetary mechanism 8, respectively, the output shaft of the cutting motor is coaxially connected with the input end of the planetary mechanism, the output end of the planetary mechanism is coaxially connected with a center gear 83, and the center gear is meshed with the left and right sets of gear reduction mechanisms to play a role of driving at the same time. The central gear and the gear reduction mechanism constitute the fixed shaft gear drive mechanism. A cutting motor is used to drive the gear reduction mechanism arranged on the left and right sides of the gear reduction mechanism, and respectively transmit power to the left and right booms, which can make full use of the cutting power, improve the use efficiency, and reduce the loss of idling transmission movement. In the embodiments shown in the drawings, the output shaft of the cutting motor is coaxially connected with the sun gear of the planetary mechanism, and the planet carrier of the planetary mechanism is coaxially connected with the sun gear. The center gear is shared by the left and right sets of gear reduction mechanisms.

The front direction herein refers to the direction closer to the coal wall during the mining operation.

## Claims

1. A cutting system for a coal mining machine, wherein the cutting system for a coal mining machine includes a fixed reduction gearbox and a ranging arm stand, wherein, the fixed reduction gearbox includes a housing, as well as a cutting motor and a front-stage cutting drive mechanism arranged in the housing; the output shaft of the cutting motor is connected to a front-stage cutting drive mechanism which is a multi-stage large reduction ratio drive mechanism formed by the combination of a planetary mechanism and a fixed-axis gear drive mechanism, and the output end of which is the front-stage end gear; the ranging arm stand includes a housing ranging armand a rear-stage cutting drive mechanism; the housing ranging arm includes an L-shaped drive box; the rear-stage cutting drive mechanism is a one-stage fixed-axis gear drive mechanism with a small reduction ratio, including a rear-stage head gear, a rear-stage idler gear and a rear-stage gear shaft that are externally meshed sequentially; the rear-stage head gear is mounted inside the free end of the left and right extension section of the drive box; the free end of the front-and-rear extension section of the drive gearbox are cylindrical; the rear-stage gear shaft is mounted on the front-and-rear extension section of the drive gearbox, with its end portion extending forward to be beyond the free end of the front-and-rear extension section on the one hand and provided with a positioning installation structure for the roller on the other hand; the core of the front-stage end gear and the core of the rear-stage head gear are respectively provided with a front-stage spline hole and a rear-stage spline hole; a spline sleeve with internal and external splines is mounted in the one-stage spline hole, and the internal spline of the spline sleeve and the rear-stage spline hole are respectively matched to the front spline and the rear spline of the same spline shaft, and the center line of the spline shaft has a horizontal front-and-rear extension section.

2. The cutting system for a coal mining machine according to claim 1, wherein the housing of the ranging arm stand further includes a front support arm and a rear support arm respectively located in front of and behind the left and right extension section of the drive gearbox, wherein, the front support arm and the rear support arm are both of a suspension structure, with one end connected to the drive gearbox; the ends of the front support arm and the rear support arm away from the front-and-rear extension section of the drive gearbox are free ends; the top surfaces of the front support arm and the rear support arm are not higher than the top surface of the left and right extension section of the drive gearbox, and the bottom surfaces of the same are not lower than the bottom surface of the left and right extension section of the drive gearbox; the free ends of the front support arm and the rear support arm are respectively hinged with the housing of the fixed reduction gearbox, and the hinge axis coincides with the center line of the spline shaft.

3. The cutting system for a coal mining machine according to claim 2, wherein the housing of the fixed reduction gearbox is provided with a front hinge seat and a rear hinge seat, wherein, both the front hinge seat and the rear hinge seat are of a double-lug seat structure; the free ends of the front support arm and the rear support arm respectively fit with the front hinge seat and the rear hinge seat and hinged by insertion of a front pin roll and a rear pin roll, respectively.

4. The cutting system for a coal mining machine according to claim 3, wherein The rear hinge lug of the front hinge seat is just imbedded between the front support arm and the drive gearbox and maintains a gap to the front support arm and the drive gearbox, wherein the front-stage end gear is mounted in the rear hinge lug of the front hinge seat; an annular axial spacer is set in the internal hole of the rear hinge lug of the front hinge seat; the front pin is located in front of the axial spacer; the front-stage end gear and the spline sleeve are located behind the axial spacer; the front pin roll is provided with a central through hole, the internal spline of the spline sleeve is arranged in the rear-section internal hole, and the front-section internal hole of the spline sleeve is an unthreaded hole; there is a positioning sleeve in the central through hole; the rear end of the positioning sleeve is inserted into the unthreaded hole of the spline sleeve, axially limiting and the core part of the front end face of the spline roll; the middle part of the positioning sleeve is provided with an annular flange, and the external cylindrical surface of the annular flange is of clearance fit with the central through hole and the internal hole of the axial spacer at the same time, and there is a seal between the fit surfaces; the end surface seal is set between the rear hinge lug of the front hinge seat and the rear-stage cutting drive mechanism and/or the drive box.

5. The cutting system for a coal mining machine according to claim 2, wherein The front support arm is L-shaped, the free end of the left and right extension section of the front support arm is the free end of the front support arm, and the rear end of the front-and-rear extension section of the front support arm is connected to the drive gearbox. The top surface of the front-and-rear extension section of the front support arm is an inclined surface, and the farther away from the free end it is, the lower the height will be.

6. The cutting system for a coal mining machine according to claim 2, wherein The hinge joints of the front support arm and the rear support arm with the housing of the fixed reduction gearbox are respectively lubricated by a front automatic lubrication device and a rear automatic lubrication device.

7. The cutting system for a coal mining machine according to claim 2, 3, 4, 5,or 6, wherein it further includes an cylinder, wherein, one end of the cylinder is hinged on the housing of the fixed reduction gearbox, the free end of the front support arm is externally provided with an cylinder connecting lug, and the other end of the cylinder is hinged on the connecting lug of the cylinder, and the hinge axes at both ends of the cylinder extend horizontally in the front-and-rear direction.

8. The cutting system for a coal mining machine according to claim 7, wherein The cylinder and the front-stage cutting drive mechanism are arranged in different chambers in the internal cavity of the housing of the fixed reduction gearbox, wherein, the cylinder is located in front of the front-stage cutting drive mechanism, and the chamber where the cylinder is located is formed by the enclosure of the housing of the fixed reduction gearbox, the front support arm, the front hinge seat and the side plate installed on the front side of the housing of the fixed reduction gearbox.

9. The cutting system for a coal mining machine according to claim 8, wherein the free end of the front support arm is provided with upper and lower external cylindrical surfaces that are coaxial with the spline shaft, the housing of the fixed reduction gearbox is provided with upper and lower internal cylindrical surfaces that are coaxial with the spline shaft, and the two internal cylindrical surfaces are in clearance fit with the two external cylindrical surfaces, respectively.

10. The cutting system for a coal mining machine according to claim 2, 3, 4, 5, 6, 7, 8 or 9, wherein there is one cutting motor and one planetary mechanism, respectively, wherein, the output shaft of the cutting motor is coaxially connected with the input end of the planetary mechanism, the output end of the planetary mechanism is coaxially connected with a center gear, and the center gear is meshed with the left and right sets of gear reduction mechanisms to play a role of driving at the same time, wherein the central gear and the gear reduction mechanism constitute the fixed shaft gear drive mechanism.
